(19) Europäisches Patentamt
European Patent Office
Office européen des brevets

(11) **EP 2 942 793 A1**

(12) **EUROPEAN PATENT APPLICATION**

(43) Date of publication:
**11.11.2015 Bulletin 2015/46**

(51) Int Cl.:
***H01F 1/147*** *(2006.01)*

(21) Application number: **15166903.3**

(22) Date of filing: **08.05.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **08.05.2014 KR 20140054727**<br><br>(71) Applicant: **LG Innotek Co., Ltd.**<br>**Seoul 100-714 (KR)**<br><br>(72) Inventors:<br>• **Song, Ji Yeon**<br>**100-714 Seoul (KR)** | • **Bae, Seok**<br>**100-714 Seoul (KR)**<br>• **Moon, Won Ha**<br>**100-714 Seoul (KR)**<br>• **Lee, Sang Won**<br>**100-714 Seoul (KR)**<br>• **Lee, Jong Hyuk**<br>**100-714 Seoul (KR)**<br>• **Hyun, Soon Young**<br>**100-714 Seoul (KR)**<br><br>(74) Representative: **Zardi, Marco**<br>**M. Zardi & Co. SA**<br>**Via Pioda 6**<br>**6900 Lugano (CH)** |

(54) **SOFT MAGNETIC ALLOY, WIRELESS POWER TRANSMITTING APPARATUS AND WIRELESS POWER RECEIVING APPARATUS COMPRISING THE SAME**

(57)     Provided are a soft magnetic alloy, wireless power transmitting apparatus and wireless power receiving apparatus including the same. The soft magnetic alloy has a composition of the following Chemical Formula:

$$Fe_{100-a-b-c}X_aY_bZ_c \qquad \text{[Chemical Formula]}$$

Here, X is a nucleation element, Y and Z are metalloid elements, a is in a range of 0.1 at% to 2.0 at%, b is in a range of 1 at% to 10 at%, and c is in a range of 1 at% to 10 at%.

Fig. 2

**Description**

BACKGROUND

**1. Field of the Invention**

The present invention relates to a soft magnetic alloy, and more particularly, to a soft magnetic alloy which is applied to a wireless power transmitting apparatus and a wireless power receiving apparatus of a wireless charging system.

**2. Discussion of Related Art**

A wireless power transmitting apparatus may be connected to a power source and may include a metallic substrate, a soft magnetic core disposed on the metallic substrate, and a transmitting coil disposed on the soft magnetic core. Further, a wireless power receiving apparatus may be connected to a load and may include a soft magnetic sheet and a receiving coil disposed on the soft magnetic sheet.

In this case, the soft magnetic core of the wireless power transmitting apparatus and the soft magnetic sheet of the wireless power receiving apparatus are used as shields which block electromagnetism emitted from the transmitting coil and electromagnetism emitted from the receiving coil, respectively. Thus, energy loss between the wireless power transmitting apparatus and the wireless power receiving apparatus may be minimized and efficiency of power transmission and reception may be improved.

Generally, a soft magnetic alloy which is used as a shielding member is an iron (Fe) based soft magnetic alloy. For example, the iron (Fe) based soft magnetic alloy may be classified into a Fe-Si soft magnetic alloy, an amorphous soft magnetic alloy, a nano-crystalline soft magnetic alloy, etc. The Fe-Si soft magnetic alloy has a high saturation magnetic flux density in a range of 1.5 T to 1.9 T, however, since the Fe-Si soft magnetic alloy has low resistivity, it may be used only at a low frequency of 10 kHz. Thus, the Fe-Si soft magnetic alloy may not be applied to a wireless charging system which uses a frequency band in a range of 110 kHz to 250 kHz. The amorphous soft magnetic alloy or the nano-crystalline soft magnetic alloy including Fe, which is a ferromagnetic element, and a metalloid based element may be applied to the wireless charging system at the frequency band in a range of 110 kHz to 250 kHz, however, since it has a low saturation magnetic flux density of 1.56 T or less, there are problems in that it is difficult to make thinner and a manufacturing cost is increased.

SUMMARY OF THE INVENTION

The present invention is directed to a soft magnetic alloy which is applied to a wireless power transmitting apparatus and a wireless power receiving apparatus of a wireless charging system.

According to an aspect of the present invention, there is provided a soft magnetic alloy having a composition of the following Chemical Formula:

$$[\text{Chemical Formula}] \qquad Fe_{100-a-b-c}X_aY_bZ_c$$

here, X is a nucleation element, Y and Z are metalloid elements, a is in a range of 0.1 at% to 2.0 at%, b is in a range of 1 at% to 10 at%, and c is in a range of 1 at% to 10 at%.

The nucleation element may include at least one of Cu, Ag, and Au.

The metalloid element may include at least one of B, C, Al, Si, P, Ga, and Ge.

The X may include Cu, the Y may include B, and the Z may include Si.

The a may be in a range of 0.1 at% to 1.7 at%.

The b may be in a range of 1.5 at% to 7.5 at% and the c may be in a range of 2 at% to 8 at%. b+c may be in a range of 3.5 at% to 9.5 at%.

The soft magnetic alloy may have a saturation magnetic flux density of 1.7 T or more, coercivity of 40 Oe or less, and resistivity of 30 $\mu\Omega\cdot$cm or more.

According to another aspect of the present invention, there is provided a wireless power transmitting apparatus of a wireless charging system which includes a soft magnetic core and a transmitting coil formed on the soft magnetic core, and the soft magnetic core includes a soft magnetic alloy having the composition of the above-described chemical formula.

According to still another aspect of the present invention, there is provided a wireless power receiving apparatus of a wireless charging system which includes a soft magnetic sheet and a receiving coil formed on the soft magnetic sheet, and the soft magnetic sheet includes a soft magnetic alloy having the above-described chemical formula.

BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:

FIG. 1 is a block diagram showing a wireless charging system according to an exemplary embodiment of the present invention;

FIG. 2 is a block diagram showing a wireless power transmitting and receiving method of a wireless charging system according to an exemplary embodiment of the present invention;

FIG. 3 is a view showing a part of a wireless power transmitting apparatus according to an exemplary embodiment of the present invention;

FIG. 4 is a view showing a part of a wireless power receiving apparatus according to an exemplary embodiment of the present invention;

FIG. 5 shows spherical powder of a soft magnetic alloy manufactured according to an exemplary embodiment of the present invention;

FIG. 6 shows flakes of a soft magnetic alloy manufactured according to an exemplary embodiment of the present invention; and

FIG. 7 is a graph for comparing saturation magnetizations of examples and comparative examples.

DETAILED DESCRIPTION OF EXEMPLARY EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the invention will be described in detail with reference to the accompanying drawings. Like reference numerals in the drawings denote like elements, and thus the description thereof will not be repeated.

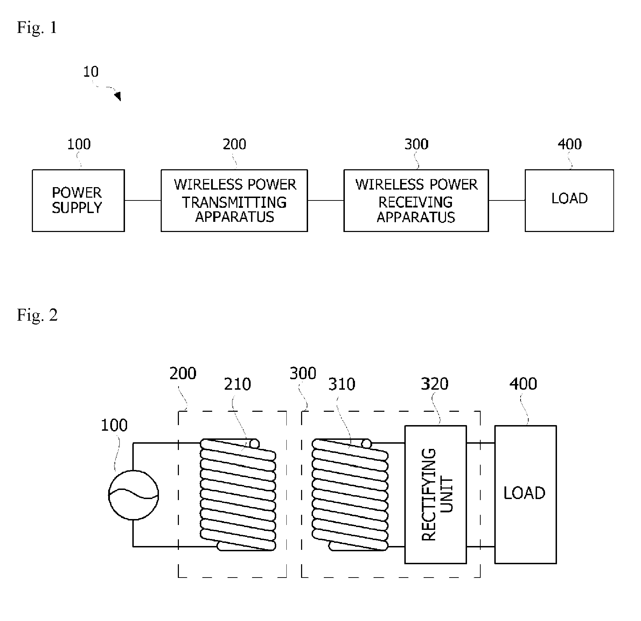

FIG. 1 is a block diagram showing a wireless charging system according to an exemplary embodiment of the present invention.

Referring to FIG. 1, the wireless charging system 10 includes a power supply 100, a wireless power transmitting apparatus 200, a wireless power receiving apparatus 300, and a load terminal 400.

The wireless power transmitting apparatus 200 is connected to the power supply 100 and receives power from the power supply 100. Further, the wireless power transmitting apparatus 200 wirelessly transmits the power to the wireless power receiving apparatus 300. In this case, the wireless power transmitting apparatus 200 may transmit the power using an electromagnetic induction method or a resonance method. Although it is illustrated that the power supply 100 and the wireless power transmitting apparatus 200 are separately configured, it is not limited thereto. The power supply 100 may be included in the wireless power transmitting apparatus 200.

The wireless power receiving apparatus 300 wirelessly receives the power from the wireless power transmitting apparatus 200. The wireless power receiving apparatus 300 may receive the power using the electromagnetic induction method or the resonance method. Further, the wireless power receiving apparatus 300 supplies the received power to the load 400. The load terminal 400 may be a battery or a device in which the battery is embedded. Although it is illustrated that the load terminal 400 and the wireless power receiving apparatus 300 are separately configured, it is not limited thereto. The load terminal 400 may be included in the wireless power receiving apparatus 300.

FIG. 2 is a block diagram showing a wireless power transmitting and receiving method of the wireless charging system according to the exemplary embodiment of the present invention.

Referring to FIG. 2, the wireless power transmitting apparatus 200 may include a transmitting coil 210. The wireless power receiving apparatus 300 may include a receiving coil 310 and a rectifying unit 320.

The power supply 100 may generate alternating current (AC) power having a predetermined frequency to supply the AC power to the transmitting coil 210 of the wireless power transmitting apparatus 200.

Further, the AC power generated by the transmitting coil 210 may be transferred to the receiving coil 310 which is inductively coupled to the transmitting coil 210.

Alternatively, the power transferred to the transmitting coil 210 may be transferred to the wireless power receiving apparatus 300 having the same resonance frequency as the wireless power transmitting apparatus 200 by a frequency resonance method. The power may be transferred between two LC circuits, in which impedance is matched, by resonance.

The power transferred to the receiving coil 310 using the electromagnetic induction method or the resonance method may rectified through the rectifying unit 320 to be transferred to the load terminal 400.

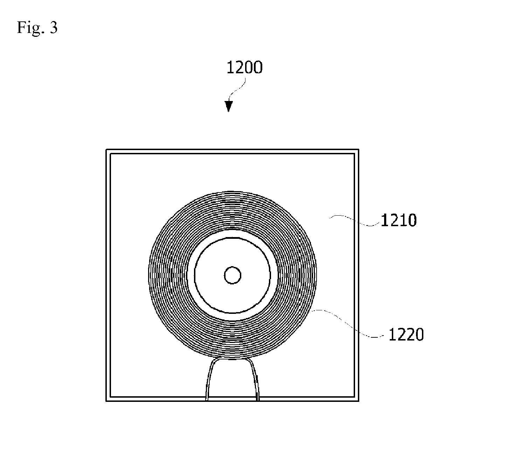

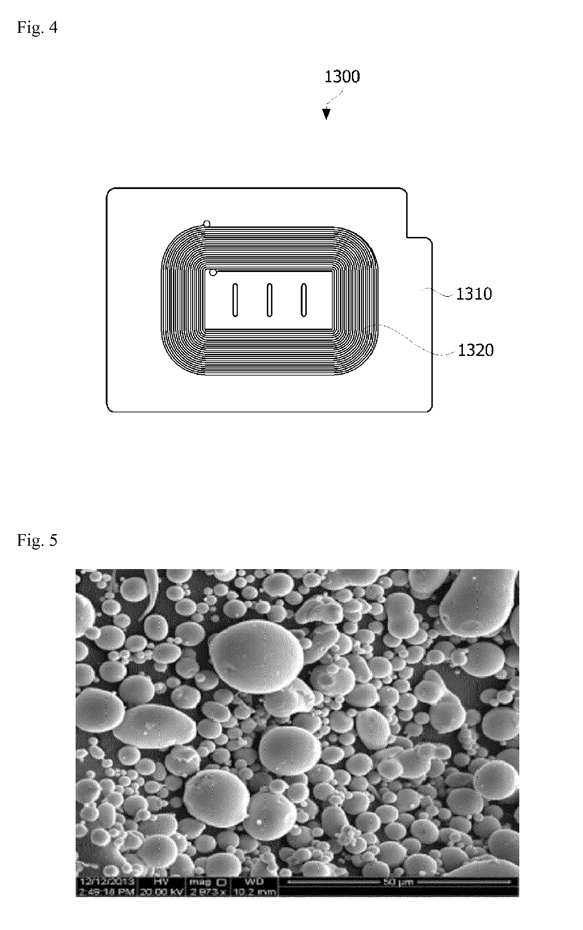

FIG. 3 is a view showing a part of a wireless power transmitting apparatus according to an exemplary embodiment of the present invention and FIG. 4 is a view showing a part of a wireless power receiving apparatus according to an exemplary embodiment of the present invention.

Referring to FIG. 3, the wireless power transmitting apparatus 1200 includes a soft magnetic core 1210 and a transmitting coil 1220. The transmitting coil 1220 may correspond to the transmitting coil 210 shown in FIG. 2.

The soft magnetic core 1210 may include a soft magnetic material having a thickness of several nanometers. Further, the transmitting coil 1220 may be disposed on the soft magnetic core 1210. Although not shown in the drawing, a permanent magnet may be further disposed on the soft magnetic core 1210 and the permanent magnet may be surrounded by the transmitting coil 1220.

Referring to FIG. 4, the wireless power receiving apparatus 1300 may include a soft magnetic substrate 1310 and a receiving coil 1320. The receiving coil 1320 may be disposed on the soft magnetic substrate 1310. The receiving coil 1320 may correspond to the receiving coil 310 shown in FIG. 2.

The receiving coil 1320 may include a coil surface which is wounded in a direction parallel to the soft magnetic substrate 1310 on the soft magnetic substrate 1310.

Although not shown in the drawing, when the wireless power receiving apparatus 1300 simultaneously has a wireless charging function and a near field communication (NFC) function, an NFC coil may be further stacked on the soft magnetic substrate 1310. The NFC coil may be formed to surround the outside of the receiving coil 1320.

According to the embodiment of the present invention, at least one of the soft magnetic core of the wireless power transmitting apparatus and the soft magnetic substrate of the wireless power receiving apparatus includes a soft magnetic alloy having a composition of Chemical Formula 1.

[Chemical Formula 1]        $Fe_{100-a-b-c}X_aY_bZ_c$

Here, X is a nucleation element, and Y and Z are metalloid elements.

The nucleation element in a range of 0.1 at% to 2 at% (atomic percent), and preferably, in a range of 0.1 at% to 1.7 at% may be included. That is, a may be in a range of 0.1 at% to 2.0 at%, and preferably, in a range of 0.1 at% to 1.7 at%.

There are problems in that when the nucleation element at 0.1 at% or less may be included, resistivity is reduced to 30 $\mu\Omega\cdot$cm or less and coercivity is increased to 40 Oe or more, and when the nucleation element at more than 2 at% may be included, a saturation magnetic flux density is reduced to 1.7 T or less and the coercivity is increased to 40 Oe or more. When the resistivity is reduced to 30 $\mu\Omega\cdot$cm or less, eddy current loss is increased at a frequency band of 100 kHz or more. Since the wireless charging system uses the frequency band in a range of 100 kHz to 250 kHz, the soft magnetic alloy having low resistivity of 30 $\mu\Omega\cdot$cm or less is not suitable for the wireless charging system. Further, when the saturation magnetic flux density is reduced to 1.7 T or less, it is difficult to implement a shield member in a thin shape. Further, when the coercivity is increased to 40 Oe or more, it is difficult to manufacture the soft magnetic alloy in a flake form and thus magnetic permeability in a surface direction is reduced.

Here, the nucleation element may include at least one of Cu, Ag, and Au. Since Cu among nucleation elements has an atomic radius greater than Fe, the Cu may serve as nucleus growth and may generate nano-sized precipitates.

Further, the b may be in a range of 1 at% to 10 at%, and preferably, in a range of 1.5 at% to 7.5 at%, and the c may be in a range of 1 at% to 10 at%, and preferably, in a range of 2 at% to 8 at%. When the b is less than 1 at%, glass forming ability may be reduced and a crystalline shape may be present, and thus the resistivity may be reduced to 30 $\mu\Omega\cdot$cm or less. When the b is more than 10 at%, the coercivity may be increased to 40 Oe or more, it is difficult to manufacture flakes from soft magnetic alloy powder, and the saturation magnetic flux density may be reduced. When the c is 1 at% or less, the glass forming ability may be reduced and the crystalline shape may be present, and thus the resistivity may be reduced to 30 $\mu\Omega\cdot$cm or less. When the c is more than 10 at%, the coercivity may be increased to 40 Oe or more, it is difficult to manufacture the flakes from the soft magnetic alloy powder, and the saturation magnetic flux density may be reduced.

Here, the metalloid element may include at least one of B, C, Al, Si, P, Ga, and Ge. The metalloid element in a range of 3 at% to 12 at%, and preferably, in a range of 3.5 at% to 9.5 at% may be included. That is, b+c may be in a range of 3 at% to 12 at%, and preferably, in a range of 3.5 at% to 9.5 at%.

There is a problem in that when the metalloid element of less than 3 at% is included, the glass forming ability may be reduced and the crystalline shape may be present, and thus the resistivity may be reduced to 30 $\mu\Omega\cdot$cm or less. Further when the metalloid element of more than 12 at% is included, the coercivity may be increased to 40 Oe or more, it is difficult to manufacture the flakes from the soft magnetic alloy powder, and the saturation magnetic flux density may be reduced.

Meanwhile, since B or Si among the metalloid elements has an atomic radius smaller than Fe, the glass forming ability is excellent. Therefore, the Y may include B and the Z may include Si.

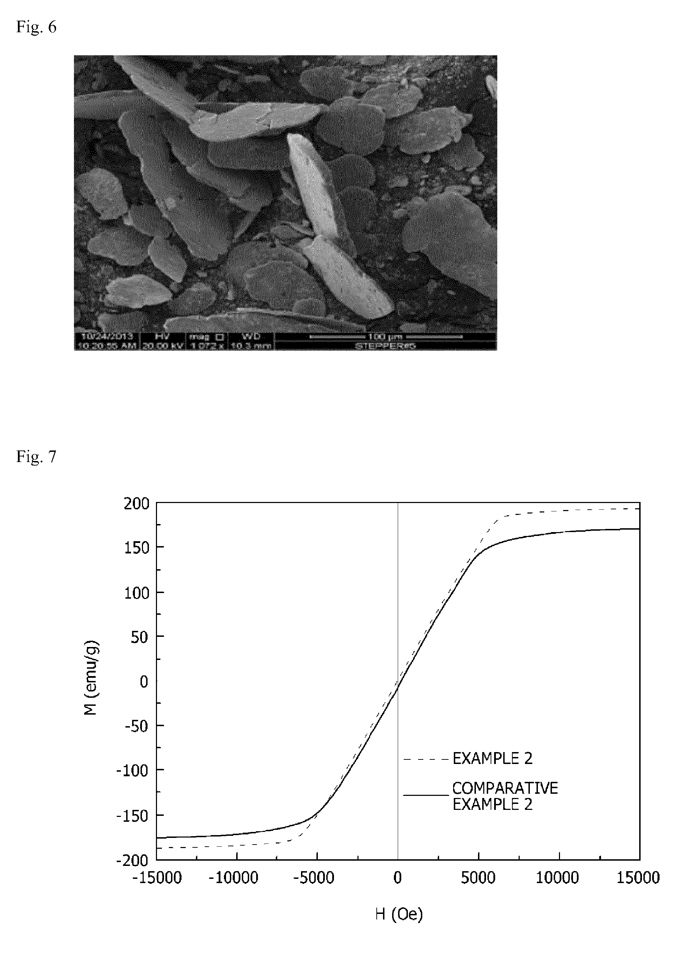

Hereinafter, it will be described in detail using examples and comparative examples. In soft magnetic alloys according to the examples and the comparative examples, a metal powder of each composition was dissolved at a temperature of 1700 °C and then was cooled to a room temperature using a water quenching method, and thus a spherical powder was generated using a gas atomizer. And then, the spherical powder was heat treated at a temperature of 350 °C and then manufactured into flakes. FIG. 5 is a view showing spherical powder of the soft magnetic alloy manufactured according to the exemplary embodiment of the present invention, and FIG. 6 is a view showing the flakes of the soft magnetic alloy manufactured according to the exemplary embodiment of the present invention.

A saturation magnetic flux density (T), coercivity (Oe), and resistivity ($\mu\Omega\cdot$cm) of the soft magnetic alloy powder manufactured as described above were measured, and then a saturation magnetization (M, emu/g) was calculated. Here, the saturation magnetic flux density (T) was measured using a vibrating sample magnetometer (VSM) system and the resistivity ($\mu\Omega\cdot$cm) was measured using a point probe. The saturation magnetization is a unique characteristic of a material and is a number which indicates how strongly the material can be magnetized. A relation between the saturation magnetic flux density and the saturation magnetization is the same as the following Equation 1.

[Equation 1]

$$T = 4\pi \times \sigma \times M$$

Here, T is a saturation magnetic flux density, $\sigma$ is a density of soft magnetic alloy powder, and M is a saturation magnetization.

Tables 1 to 6 show a composition, a saturation magnetization (M), a saturation magnetic flux density (T), coercivity (Oe), and resistivity ($\mu\Omega\cdot$cm) of the soft magnetic alloy according to the examples and the comparative examples. FIG. 7 is a graph for comparing the saturation magnetizations of the examples and the comparative examples.

[Table 1]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Comparative Example 1 | $Fe_{bal.}B_{3.8}Si_{5.7}$ | 192.6 | 1.89 | 42.7 | 28.9 | F |
| Comparative Example 2 | $Fe_{bal.}Cu_{2.4}B_{3.8}Si_{5.7}$ | 170.9 | 1.67 | 43.3 | 39.5 | F |
| Comparative Example 3 | $Fe_{bal.}Cu_{3.3}B_{3.8}Si_{5.7}$ | 168.5 | 1.65 | 46.0 | 42.1 | F |

[Table 2]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Example 1 | $Fe_{bal.}Cu_{0.1}B_{3.8}Si_{5.7}$ | 190.9 | 1.87 | 39.5 | 32.3 | P |
| Example 2 | $Fe_{bal.}Cu_{0.5}B_{3.8}Si_{5.7}$ | 190.4 | 1.87 | 35.0 | 34.8 | P |
| Example 3 | $Fe_{bal.}Cu_{1.2}B_{3.8}Si_{5.7}$ | 183.7 | 1.80 | 38.5 | 35.3 | P |
| Example 4 | $Fe_{bal.}Cu_{1.7}B_{3.8}Si_{5.7}$ | 181.5 | 1.78 | 39.8 | 39.2 | P |

[Table 3]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Comparative Example 4 | $Fe_{bal.}Cu_{1.2}B_{0.8}Si_{2.0}$ | 192.7 | 1.89 | 34.1 | 16.9 | F |
| Comparative Example 5 | $Fe_{bal.}Cu_{1.2}B_{11.0}Si_{2.0}$ | 177.4 | 1.74 | 43.5 | 45.1 | F |
| Comparative Example 6 | $Fe_{bal.}Cu_{1.2}B_{13.0}Si_{2.0}$ | 173.7 | 1.70 | 46.3 | 46.5 | F |

[Table 4]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Example 5 | $Fe_{bal.}Cu_{1.2}B_{1.5}Si_{2.0}$ | 192.4 | 1.88 | 33.9 | 30.1 | P |
| Example 6 | $Fe_{bal.}Cu_{1.2}B_{4.3}Si_{2.0}$ | 184.8 | 1.81 | 37.9 | 35.8 | P |
| Example 7 | $Fe_{bal.}Cu_{1.2}B_{7.5}Si_{2.0}$ | 182.2 | 1.78 | 39.4 | 40.8 | P |

[Table 5]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Comparative Example 7 | $Fe_{bal.}Cu_{1.2}B_{1.5}Si_{0.8}$ | 196.3 | 1.92 | 37.9 | 15.8 | F |
| Comparative Example 8 | $Fe_{bal.}Cu_{1.2}B_{1.5}Si_{1\,1.3}$ | 174.5 | 1.71 | 46.3 | 62 | F |
| Comparative Example 9 | $Fe_{bal.}Cu_{1.2}B_{1.5}Si_{1\,3.2}$ | 170.9 | 1.67 | 46 | 68.8 | F |

[Table 6]

| Experiment No. | Composition (at%) | Saturation Magnetization (emu/g) | Saturation Magnetic Flux Density (T) | Coercivity (Oe) | Resistivity ($\mu\Omega\cdot$cm) | P/F |
|---|---|---|---|---|---|---|
| Example 8 | $Fe_{bal.}Cu_{1.2}B_{1.5}Si_{2.3}$ | 194.7 | 1.91 | 37.2 | 31.3 | P |
| Example 9 | $Fe_{bal.}Cu_{1.2}B_{1.5}Si_{5.2}$ | 188.3 | 1.84 | 38.9 | 41.7 | P |
| Example 10 | $Fe_{bal.}Cu_{1.2}B_{1.5}Si_{8.0}$ | 183.0 | 1.79 | 39.6 | 51.9 | P |
| Example 11 | $Fe_{bal.}Cu_{1.0}B_{1.5}Si_{5.2}$ | 194.7 | 1.91 | 34.6 | 50.3 | P |
| Example 12 | $Fe_{bal.}Cu_{1.0}B_{4.0}Si_{4.3}$ | 189.9 | 1.86 | 37.7 | 43.8 | P |

Referring to Tables 1 to 6, in Comparative Example 1, where a nucleation element Cu is included at less than 0.1 at%, the coercivity is 40 Oe or more and the resistivity is 30 $\mu\Omega\cdot$cm or less. In Comparative Examples 2 and 3, where the nucleation element Cu is included at more than 2 at%, the saturation magnetic flux density is 1.7 T or less and the coercivity is 40 Oe or more.

Further, in Comparative Examples 4 and 7, where metalloid elements B and Si are included at less than 3 at%, the resistivity is 30 $\mu\Omega\cdot$cm or less. In Comparative Examples 5, 6, 8, and 9, where metalloid elements B and Si are included at more than 12 at%, the coercivity is 40 Oe or more. Specifically, Comparative Example 4 may include B at 1 at% or less and Comparative Example 7 may include Si at 1 at% or less. Further, Comparative Examples 5 and 6 may include B at more than 10 at% and Comparative Examples 8 and 9 may include Si at more than 10 at%.

On the other hand, as shown in Examples 1 to 12, when the Fe based soft magnetic alloy includes the nucleation element Cu in a range of 0.1 at% to 2 at%, the metalloid elements B and Si in a range of 2 at% to 12 at%, and specifically, B and Si each in a range of 1 at% to 10 at%, the saturation magnetic flux density may be 1.7 T or more, the coercivity may be 40 Oe or less, and the resistivity may be 30 $\mu\Omega\cdot$cm.

Specifically, referring to FIG. 7 which shows results in which the saturation magnetization of Example 2 and Comparative Example 2 are compared, the saturation magnetization of the soft magnetic alloy according to the example is greater than that of the soft magnetic alloy according to the comparative example.

Thus, since the soft magnetic alloy according to the exemplary embodiment of the present invention has a high saturation magnetic flux density, it is easy to manufacture the flake form, and it may be used at a frequency band in a range of 110 kHz to 250 kHz, the soft magnetic alloy may be suitable for the wireless power transmitting apparatus or the wireless power receiving apparatus of the wireless charging system.

According to the embodiment of the present invention, a soft magnetic alloy which is applied at a frequency band in a range of 100 kHz to 250 kHz and having a high saturation magnetic flux density can be obtained. Thus, a shielding member applied to wireless power transmitting and receiving apparatuses can be implemented in a thin shape and a large capacity of the wireless power transmission and reception can be satisfied. Further, since it is easy to manufacture flakes from the soft magnetic alloy, the soft magnetic alloy can be applied to the wireless power transmitting and receiving apparatuses which require high magnetic permeability in a direction of a surface.

The soft magnetic alloy according to the exemplary embodiments of the present invention can be applied to a shield member included in an antenna module of a radio frequency identification (RFID) tag as well as a shield member of the wireless power transmitting and receiving apparatuses.

In this specification, although the soft magnetic core of the wireless power transmitting apparatus or the soft magnetic sheet of the wireless power receiving apparatus of the wireless charging system is described for convenience of descriptions, it is not limited thereto. The soft magnetic alloy according to the exemplary embodiments of the present invention may be applied to various sheets for blocking an electromagnetic field. For example, the soft magnetic alloy according to the exemplary embodiment of the present invention may be applied to a shielding sheet for a RFID antenna.

While the example embodiments of the present invention and their advantages have been described in detail, it should be understood that various changes, substitutions and alterations may be made herein without departing from the scope of the invention as defined by the following claims.

**Claims**

1. A soft magnetic alloy having a composition of the following Chemical Formula:

    [Chemical Formula]    $Fe_{100-a-b-c}X_aY_bZ_c$

    here, X is a nucleation element, Y and Z are metalloid elements, a is in a range of 0.1 at% to 2.0 at%, b is in a range of 1 at% to 10 at%, and c is in a range of 1 at% to 10 at%.

2. The alloy of claim 1, wherein the nucleation element comprises at least one of Cu, Ag, and Au.

3. The alloy of claim 1, wherein the metalloid element comprises at least one of B, C, Al, Si, P, Ga, and Ge.

4. The alloy of claim 1, wherein the X comprises Cu, the Y comprises B, and the Z comprises Si.

5. The alloy of claim 4, wherein the a is in a range of 0.1 at% to 1.7 at%.

6. The alloy of claim 4, wherein the b is in a range of 1.5 at% to 7.5 at% and the c may be in a range of 2 at% to 8 at%.

7. The alloy of claim 4, wherein b+c is in a range of 3.5 at% to 9.5 at%.

8. The alloy of claim 1, wherein the soft magnetic alloy has a saturation magnetic flux density of 1.7 T or more, coercivity of 40 Oe or less, and resistivity of 30 $\mu\Omega\cdot$cm or more.

9. A wireless power transmitting apparatus of a wireless charging system, the apparatus comprising:

    a soft magnetic core; and
    a transmitting coil formed on the soft magnetic core,
    wherein the soft magnetic core comprises a soft magnetic alloy having the following Chemical Formula:

    [Chemical Formula]    $Fe_{100-a-b-c}X_aY_bZ_c$

    here, X is a nucleation element, Y and Z are metalloid elements, a is in a range of 0.1 at% to 2.0 at%, b is in a range of 1 at% to 10 at%, and c is in a range of 1 at% to 10 at%.

10. The wireless power transmitting apparatus of claim 9, wherein the nucleation element comprises at least one of Cu, Ag, and Au.

11. The wireless power transmitting apparatus of claim 9, wherein the metalloid element comprises at least one of B, C, Al, Si, P, Ga, and Ge.

12. The wireless power transmitting apparatus of claim 9, wherein the X comprises Cu, the Y comprises B, and the Z comprises Si.

13. A wireless power receiving apparatus of a wireless charging system, the apparatus comprising:

    a soft magnetic sheet; and
    a receiving coil formed on the soft magnetic sheet,
    wherein the soft magnetic sheet comprises a soft magnetic alloy having the following Chemical Formula:

[Chemical Formula]        $Fe_{100-a-b-c}X_aY_bZ_c$

here, X is a nucleation element, Y and Z are metalloid elements, a is in a range of 0.1 at% to 2.0 at%, b is in a range of 1 at% to 10 at%, and c is in a range of 1 at% to 10 at%.

14. The wireless power receiving apparatus of claim 13, wherein the nucleation element comprises at least one of Cu, Ag, and Au.

15. The wireless power receiving apparatus of claim 13, wherein the metalloid element comprises at least one of B, C, Al, Si, P, Ga, and Ge.

Fig. 1

Fig. 2

Fig. 3

1200

1210

1220

Fig. 4

1300

1310

1320

Fig. 5

Fig. 6

Fig. 7

Europäisches
Patentamt

European
Patent Office

Office européen
des brevets

**EUROPEAN SEARCH REPORT**

Application Number

EP 15 16 6903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 853 726 A (UNIV NANJING) 6 October 2010 (2010-10-06) | 1-6 | INV. H01F1/147 |
| Y | * paragraphs [0012], [0014] * <br> * claims 1-4 * | 7-15 | |
| X | CN 101 834 046 A (NINGBO INST OF MATERIAL) 15 September 2010 (2010-09-15) | 1-6 | |
| Y | * claim 1 * | 7-15 | |
| X | WO 2013/094690 A1 (HITACHI) 27 June 2013 (2013-06-27) | 1-6 | |
| Y | * paragraph [0013] * | 7-15 | |
| Y | WO 2013/162336 A1 (INNOTEK) 31 October 2013 (2013-10-31) | 9-15 | |
| A | * figure 1 * | 1-8 | |
| Y | DE 10 2005 021060 A1 (MAGNETEC) 16 February 2006 (2006-02-16) | 8 | |
| A | * claim 2 * | 1-7,9-15 | |
| Y | EP 0 271 657 A2 (HITACHI) 22 June 1988 (1988-06-22) | 8 | TECHNICAL FIELDS SEARCHED (IPC) |
| A | * page 3, paragraph 23-28 * <br> * page 5, paragraph 31-58 * | 1-7,9-15 | H01F |

The present search report has been drawn up for all claims

| Place of search | Date of completion of the search | Examiner |
|---|---|---|
| Munich | 1 October 2015 | Subke, Kai-Olaf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 16 6903

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2015

| Patent document cited in search report | | | Publication date | Patent family member(s) | | | Publication date |
|---|---|---|---|---|---|---|---|
| CN 101853726 | A | | 06-10-2010 | NONE | | | |
| CN 101834046 | A | | 15-09-2010 | NONE | | | |
| WO 2013094690 | A1 | | 27-06-2013 | CN | 104010748 | A | 27-08-2014 |
| | | | | EP | 2796223 | A1 | 29-10-2014 |
| | | | | JP | WO2013094690 | A1 | 27-04-2015 |
| | | | | US | 2015000862 | A1 | 01-01-2015 |
| | | | | WO | 2013094690 | A1 | 27-06-2013 |
| WO 2013162336 | A1 | | 31-10-2013 | CN | 104254960 | A | 31-12-2014 |
| | | | | EP | 2843801 | A1 | 04-03-2015 |
| | | | | KR | 20130120912 | A | 05-11-2013 |
| | | | | US | 2015077048 | A1 | 19-03-2015 |
| | | | | WO | 2013162336 | A1 | 31-10-2013 |
| DE 102005021060 | A1 | | 16-02-2006 | NONE | | | |
| EP 0271657 | A2 | | 22-06-1988 | CA | 1323219 | C | 19-10-1993 |
| | | | | DE | 3779070 | D1 | 17-06-1992 |
| | | | | EP | 0271657 | A2 | 22-06-1988 |
| | | | | JP | H0774419 | B2 | 09-08-1995 |
| | | | | JP | H03219009 | A | 26-09-1991 |
| | | | | US | 4881989 | A | 21-11-1989 |
| | | | | US | 5160379 | A | 03-11-1992 |

EPO FORM P0459

For more details about this annex : see Official Journal of the European Patent Office, No. 12/82